# EUROPÄISCHE PATENTSCHRIFT

(11) **EP 3 156 740 B1**
(45) Veröffentlichungstag und Bekanntmachung des Hinweises auf die Patenterteilung: **11.09.2019**
(21) Anmeldenummer: 16001624.2
(22) Anmeldetag: 10.08.2015
(51) Int. Cl.: F28F 9/013, F28F 9/02, F28F 21/06, F28D 9/04, F28D 20/00, F24T 10/15

(54) **ENERGIESPEICHER**
ENERGY STORAGE DEVICE
ACCUMULATEUR D'ÉNERGIE

(30) Priorität: 13.08.2014 DE 102014012131
(43) Veröffentlichungstag der Anmeldung: 19.04.2017
(62) Teilanmeldung aus: 15400037.6
(73) Patentinhaber: Mefa Befestigungs- und Montagesysteme GmbH, 74635 Kupferzell (DE)
(72) Erfinder: Schneider, Martin, 74613 Öhringen (DE)
(74) Vertreter: Patentanwälte Schuster, Müller & Partner mbB

(56) Entgegenhaltungen:
- EP-A1- 2 392 884
- EP-A1- 2 738 504
- WO-A2-2014/085874
- DE-A1- 3 110 719
- DE-A1- 3 209 779
- DE-A1- 3 418 561
- DE-U1- 8 125 746
- US-A- 3 486 489
- US-A- 5 109 920
- US-A- 6 138 472
- US-A1- 2011 139 425
- US-A1- 2013 075 067

## Beschreibung

### Stand der Technik

Die Erfindung geht aus von einem Energiespeicher, nach der Gattung des Anspruchs 1.

Wärmeübertragungselemente zur Energiegewinnung, wie beispielsweise flächige flexible Absorbermatten oder dgl. bzw. Energiespeicher, sind seit langem Stand der Technik. Diese dienen hauptsächlich als Energiequelle einer Wärmepumpe. Werden die flächigen Absorbermatten im Erdreich verbaut, ist oft eine sehr große auf die Erdoberfläche projizierte Einbaufläche notwendig. Die Energiespeicher sind sehr komplex in ihrem Aufbau.

Beispielsweise offenbart die Patentschrift DD 226 058 B3 ein derartiges flächiges flexibles Wärmeübertragungselement, in welchem Plastschläuche für den Transport des Wärmeträgers angeordnet und an deren Enden Versorgungsleitungen bzw. Speicherbehälter angeschlossen sind, wobei die Schläuche als Bindungselement Schuss in ein Kettengewirke eingebunden sind. Nachteilig an einer solchen technischen Lösung eines Wärmeübertragungselements ist, dass dieses in seiner flächigen Ausführungsform einen großen auf die Erdoberfläche projizierten Flächenbedarf im Erdreich aufweist. In einer aufgewickelten Ausführungsform wird der Wärmeübergang deutlich reduziert.

Des Weiteren zeigt die Offenlegungsschrift DD 293 882 A5 ebenfalls eine ebenflächige flexible Heizmatte, welche Schläuche zum Transport eines Energieträgers aufweist, so dass in einem Gewebe oder Gewirke zwischen in Querrichtung verlaufenden Fäden aus weichem, voluminösen, strangförmigen Material ein flexibler Schlauch mit im Vergleich zu den Fäden geringem Durchmesser mäanderförmig eingebunden ist, wobei auf einer Seite der Heizmatte die Fäden und der Schlauch eine Ebene bilden. Diese technische Lösung weist ebenfalls die vorgenannten Nachteile auf.

In den Patentschriften US 6 138 472 A und US 5 109 920 A werden Wärmeübertragungselemente beschrieben, die aufgewickelte Leitungen aufweisen.

Die Erfindung liegt daher die Aufgabe zugrunde, einen Energiespeicher zur Verfügung zu stellen, der die obigen Nachteile ausräumt

### Die Erfindung und ihre Vorteile

Der erfindungsgemäße Energiespeicher mit den Merkmalen des Anspruchs 1, hat demgegenüber den Vorteil, dass vier Steckplatten in einer untersten Ebene zusammengesteckt angeordnet sind, wobei mindestens zwei Wärmeübertragungselemente auf der untersten Ebene der Steckplatten aufgewickelt angeordnet sind, und weitere vier Steckplatten in einer zweiten Ebene auf den gewickelten Wärmeübertragungselementen aufgesteckt angeordnet sind, wobei auch hier mindestens zwei Wärmeübertragungselemente auf der zweiten Ebene der Steckplatten aufgewickelt angeordnet sind, und weitere vier Steckplatten in einer dritten Ebene auf der zweiten Ebene der gewickelten Wärmeübertragungselemente aufgesteckt angeordnet sind und an mindestens einer Steckplatte ein Profil angeordnet ist.

Dadurch bildet das Gesamtsystem der Steckplatten und Wärmeübertragungselemente eine stabile Einheit. Darüber hinaus wird durch die Profile, die an die Steckplatten des Energiespeichers geschraubt werden, die sich an der Decke bzw. Wand des Behälters abstützen müssen, ein Aufschwimmen des Gesamtsystems im Behälter verhindert.

Nach einer vorteilhaften Ausgestaltung des erfindungsgemäßen Energiespeichers sind mehrere aufgewickelte und mittels Aussparungen in mindestens einer Steckplatte im Behälter angeordnete Wärmeübertragungselemente im Behälter übereinander angeordnet. Eine derartige Anordnung von Wärmeübertragungselementen in dem Behälter hat den Vorteil, dass die Wärmeübertragungsfläche bei sehr geringem Platzbedarf deutlich erhöht werden kann und so die Effizienz des Energiespeichers weiter erhöht wird.

Nach einer zusätzlichen vorteilhaften Ausgestaltung des erfindungsgemäßen Energiespeichers ist das Wärmeübertragungselement ein Wärmeübertragungselement mit zumindest einem flexiblen Element, an welchem mindestens ein Verteiler und mindestens ein Sammler angeordnet ist, wobei das flexible Element, welches mindestens eine Längsseite, mindestens eine Breite, mindestens einen Strömungskanal, mindestens eine Stirnseite und mindestens eine Krümmung aufweist, wobei das flexible Element aufgewickelt ist, wodurch der mindestens eine Verteiler einen Versatz in Richtung der Breite des flexiblen Elements des Wärmeübertragungselements zum mindestens einen Sammler aufweist. So weist das Wärmeübertragungselement bei einem Einbau im Erdreich einen sehr geringen auf die Erdoberfläche projizierten Flächenbedarf auf, wobei durch die erzeugte Spirale des flexiblen Elements des Wärmeübertragungselements der Wärmeübergang aufgrund des überall an der Wärmeübertragungsfläche im Vergleich zur Umgebung hohen Temperaturdifferenz optimal ist.

Nach einer zusätzlichen vorteilhaften Ausgestaltung des erfindungsgemäßen Energiespeichers kann das Wärmeübertragungselement aufgrund des oder der verwendeten Materialien Druckbelastungen aufnehmen. Durch die Möglichkeit der Lastaufnahme bei stärkeren Druckbelastungen kann eine Beschädigung des Wärmeübertragungselements, hier insbesondere des flächigen flexiblen Elements des Wärmeübertragungselements, verhindert werden.

Nach einer zusätzlichen vorteilhaften Ausgestaltung des erfindungsgemäßen Energiespeichers sind der mindestens eine Verteiler und/oder der mindestens eine Sammler zumindest teilweise flexibel. Die zumindest teilweise Flexibilität der Anschlusselemente des Wärmeübertragungselements für den Vor- und Rücklauf bietet den Vorteil, dass die Anschlusselemente sich ihrer Umgebung in einem gewissen Grad anpassen können und somit zum einen ein Einbau, beispielsweise in das Erdreich, erleichtert und zum anderen eine Beschädigung der Anschlusselemente verhindert wird.

Nach einer zusätzlichen vorteilhaften Ausgestaltung des erfindungsgemäßen Energiespeichers ist das Wärmeübertragungselement zumindest teilweise aus Kunststoff. Die Ausführung des Wärmeübertragungselements in Kunststoff hat den Vorteil, dass so nahezu beliebige Formen hergestellt werden können, wodurch die Wärmeübertragung optimiert wird. Zudem sinken die Herstellungskosten, weil viele Einzelteile des Wärmeübertragungselements einfach und schnell durch Extrusion hergestellt werden können.

Nach einer zusätzlichen vorteilhaften Ausgestaltung des erfindungsgemäßen Energiespeichers ist das flexible Element zumindest teilweise aus Kunststoff. Hierbei ist vorteilhaft, dass durch den Einsatz von Kunststoff in der Produktion des flexiblen Elements die Wandstärken bei dennoch hoher Stabilität sehr klein ausgestaltet werden können. So wird die Umgebungsenergie aufgrund der geringen Wandstärken optimal genutzt.

Nach einer zusätzlichen vorteilhaften Ausgestaltung des erfindungsgemäßen Energiespeichers ist das flexible Element in Form einer flächigen Matte ausgestaltet. Vorteilhaft an einer derartigen Ausgestaltung des flexiblen Elements ist es, dass durch den Einsatz einer solchen Absorbermatte die Wärmeübertragungsfläche bei geringen Herstellungskosten sehr groß wird, wodurch die Umgebungsenergie, beispielsweise aus dem Erdreich, optimal genutzt werden kann.

Nach einer zusätzlichen vorteilhaften Ausgestaltung des erfindungsgemäßen Energiespeichers ist der mindestens eine Strömungskanal des flexiblen Elements eine Kapillare. Durch einen Kapillarströmungskanal im flexiblen flächigen Element des Wärmeübertragungselements wird das Wärmeträgermedium in den Kapillaren stärker erwärmt bzw. abgekühlt und somit die restliche Umgebungsenergie, beispielsweise aus dem Erdreich, besser genutzt.

Nach einer zusätzlichen vorteilhaften Ausgestaltung des erfindungsgemäßen Energiespeichers sind mindestens ein Verteiler und mindestens ein Sammler an derselben Stirnseite des flexiblen Elements angeordnet. Somit sind auch die Anschlüsse für Sammler und Verteiler räumlich in unmittelbarer Nähe, so dass lange Leitungen zu den Anschlüssen von Sammler und Verteiler reduziert werden und dadurch die Anschlusstechnik optimiert wird.

Nach einer zusätzlichen vorteilhaften Ausgestaltung des erfindungsgemäßen Energiespeichers sind mindestens ein Verteiler und mindestens ein Sammler zumindest teilweise axial fluchtend zueinander, zumindest teilweise parallel zueinander und/oder zumindest teilweise axial ineinander angeordnet.

Nach einer zusätzlichen vorteilhaften Ausgestaltung des erfindungsgemäßen Energiespeichers weist das flexible Element mindestens zwei Stirnseiten auf, wobei mindestens eine Stirnseite einen Versatz in Richtung der Breite des flexiblen Elements des Wärmeübertragungselements zu mindestens einer anderen Stirnseite aufweist. So ist beispielsweise eine schraubenförmige Anordnung des Wärmeübertragungselements, die senkrecht im Erdreich installiert wird, denkbar, bei der der auf die Erdoberfläche projizierte Flächenbedarf sehr gering ist und der Wärmetransfer aufgrund der durch eine solche Anordnung vergrößerten Wärmeübertragungsfläche optimiert wird. Eine spiralförmige Anordnung, bei welcher mindestens eine Längsseite innerhalb einer Ebene oder zumindest teilweise außerhalb einer Ebene angeordnet ist ebenso denkbar, wie eine Kombination dieser Anordnungen.

Nach einer zusätzlichen vorteilhaften Ausgestaltung des erfindungsgemäßen Energiespeichers ist das flexible Element zumindest teilweise in mindestens zwei Elemente, die jeweils eine Stirnseite aufweisen, getrennt, wodurch die durch die Trennung gebildeten Stirnseiten der Elemente eine Stirnseite des flexiblen Elements, an der mindestens ein Sammler und mindestens ein Verteiler angeordnet sind, bilden. Somit ist der räumliche Abstand von Sammler und Verteiler und damit der gegenseitige Wärmeaustausch zwischen Sammler und Verteiler bzw. den jeweiligen Zuleitungen einstellbar.

Nach einer zusätzlichen vorteilhaften Ausgestaltung des erfindungsgemäßen Energiespeichers sind mindestens ein Verteiler und mindestens ein Sammler, mindestens zwei Verteiler und/oder mindestens zwei Sammler aus einem Bauteil. Dadurch wird die Handhabung des Wärmeübertragungselements erleichtert und der Installations- und Wartungsaufwand reduziert.

Nach einer zusätzlichen vorteilhaften Ausgestaltung des erfindungsgemäßen Energiespeichers ist an mindestens einem Verteiler und/oder an mindestens einem Sammler mindestens eine Haltevorrichtung angeordnet. Die Haltevorrichtung kann beispielsweise in Form von Ösen, Nasen, Stiften, Hacken und/oder Ähnlichem ausgestaltet sein, so dass Installationshilfsmittel wie beispielsweise Seile, Bänder und/oder Ketten an den Haltevorrichtungen angebracht werden können. Dadurch wird der Installationsaufwand des Wärmeübertragungselements reduziert.

Nach einer zusätzlichen vorteilhaften Ausgestaltung des erfindungsgemäßen Energiespeichers ist mindestens eine Längsseite an einem Verteiler in einem spitzen Winkel, einem rechten Winkel und/oder einem stumpfen Winkel angeordnet und/oder mindestens eine Längsseite an einem Sammler in einem spitzen Winkel, einem rechten Winkel und/oder einem stumpfen Winkel angeordnet. Das Variieren des Winkels erlaubt eine spannungsfreie Installation des Sammlers, des Verteilers und/oder des flexiblen Elements bei unterschiedlichen Positionen und verschiedenen Anordnungen. Durch das Variieren des Winkels kann beispielsweise ein flexibles Element, welches in Form einer flexiblen Matte ausgeführt ist, an die Installationsposition des Sammlers und/oder des Verteilers angepasst werden. Dadurch werden Spannungen im Material des Wärmeübertragungselements vermieden und somit dessen Lebensdauer erhöht.

Weitere Vorteile und vorteilhafte Ausgestaltung der Erfindung sind der nachfolgenden Beschreibung, den Ansprüchen und den Zeichnungen entnehmbar.

### Zeichnung

Bevorzugte Ausführungsbeispiele des erfindungsgemäßen Gegenstands sind in der Zeichnung dargestellt und werden im Folgenden näher erläutert. Es zeigen
- Fig. 1: eine perspektivische Darstellung eines geraden Wärmeübertragungselements,
- Fig. 2: eine perspektivische Darstellung eines flexiblen Wärmeübertragungselements,
- Fig. 3: eine perspektivische Darstellung des flexiblen Elements des Verteilers bzw. Sammlers eines Wärmeübertragungselements,
- Fig. 4: eine Detailansicht der in Fig. 3 gezeigten perspektivischen Darstellung des flexiblen Elements des Verteilers bzw. des Sammlers eines Wärmeübertragungselements,
- Fig. 5: eine perspektivische Detaildarstellung des flexiblen Elements eines Wärmeübertragungselements,
- Fig. 6: einen Schnitt durch die X-X-Ebene des in Fig. 5 dargestellten flexiblen Elements eines Wärmeübertragungselements,
- Fig. 7: eine Seitenansicht eines Wärmeübertragungselements als Spiralabsorber ohne Abstand der Wicklungen,
- Fig. 8: eine perspektivische Darstellung eines Wärmeübertragungselements als Spiralabsorber ohne Abstand der Wicklungen,
- Fig. 9: eine Seitenansicht eines Wärmeübertragungselements als Spiralabsorber mit Abstand der Wicklungen,
- Fig. 10: eine perspektivische Darstellung eines Wärmeübertragungselements als Spiralabsorber mit Abstand der Wicklungen,
- Fig. 11: eine perspektivische Darstellung zweier aufgewickelter Wärmeübertragungselemente als Wärmetauschereinheit,
- Fig. 12: eine Draufsicht zweier aufgewickelter Wärmeübertragungselemente als Wärmetauschereinheit,
- Fig. 13: eine perspektivische Darstellung eines Wärmeübertragungselements als Anwendung in einem Behälter (Zisternen- oder Eisspeicher),
- Fig. 14: eine perspektivische Anordnung der Steckplatten zum Einbau in einen Behälter,
- Fig. 15: eine perspektivische Darstellung eines Wärmeübertragungselements eines Energiespeichers gemäß der Erfindung, die Kombination mehrerer Wicklungen ineinander und übereinander sowie die Fixierung mittels Steckplatten,
- Fig. 16: eine Seitenansicht eines weiteren Ausführungsbeispiels eines Wärmeübertragungselements,
- Fig. 17: eine perspektivische Ansicht eines Ausschnittes des Wärmeübertragungselements, gemäß Fig. 16,
- Fig. 18: eine Seitenansicht eines Ausschnittes des Wärmeübertragungselements, gemäß Fig. 16,
- Fig. 19: eine Schnittansicht auf einen Ausschnitt des Wärmeübertragungselements, gemäß Fig. 16,
- Fig. 20: eine Seitenansicht eines weiteren Ausführungsbeispiels eines Wärmeübertragungselements,
- Fig. 21: eine perspektivische Ansicht eines Ausschnittes des Wärmeübertragungselements, gemäß Fig. 20,
- Fig. 22: eine Seitenansicht eines Ausschnittes des Wärmeübertragungselements, gemäß Fig. 20,
- Fig. 23: eine Schnittansicht auf einen Ausschnitt des Wärmeübertragungselements, gemäß Fig. 20,
- Fig. 24: eine Seitenansicht eines weiteren Ausführungsbeispiels eines Wärmeübertragungselements,
- Fig. 25: eine perspektivische Ansicht eines Ausschnittes des Wärmeübertragungselements, gemäß Fig. 24,
- Fig. 26: eine Seitenansicht eines Ausschnittes des Wärmeübertragungselements, gemäß Fig. 24,
- Fig. 27: eine Schnittansicht auf einen Ausschnitt des Wärmeübertragungselements, gemäß Fig. 24,
- Fig. 28: eine perspektivische Ansicht eines Ausschnittes eines weiteren Ausführungsbeispiels eines Wärmeübertragungselements,
- Fig. 29: eine Seitenansicht eines Ausschnittes des Wärmeübertragungselements, gemäß Fig. 28,
- Fig. 30: eine perspektivische Ansicht auf ein weiteres Ausführungsbeispiel eines Wärmeübertragungselements,
- Fig. 31: eine Seitenansicht eines weiteren Ausführungsbeispiels eines Wärmeübertragungselements und
- Fig. 32: eine Seitenansicht eines weiteren Ausführungsbeispiels eines Wärmeübertragungselements.

### Beschreibung der Ausführungsbeispiele

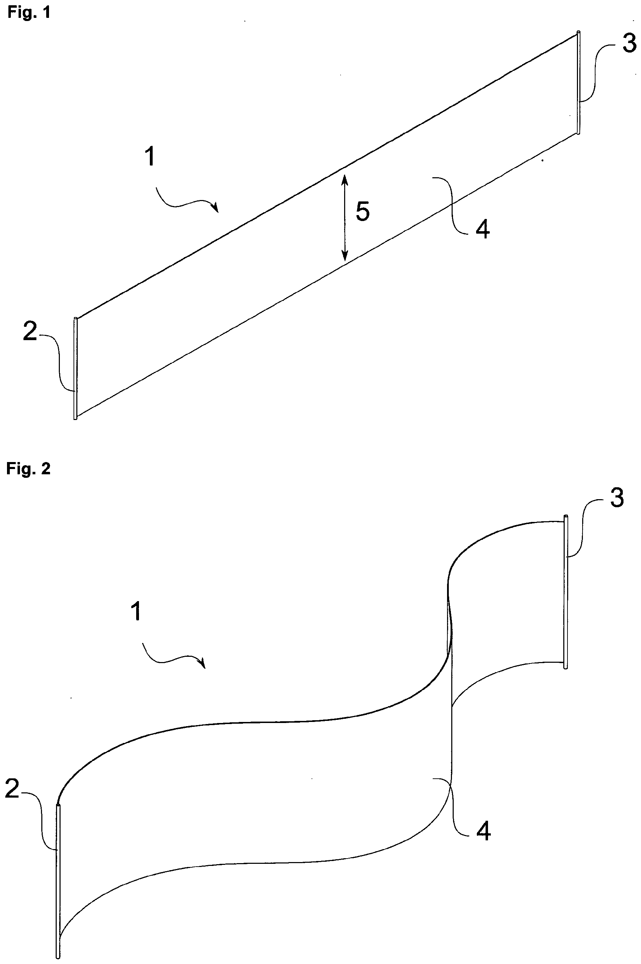

In der Fig. 1 wird eine perspektivische Darstellung eines flächigen geraden Wärmeübertragungselements 1 mit einem Verteiler 2 und einem Sammler 3, die an entgegengesetzten Stirnseiten des flexiblen Elements 4 angeordnet sind, gezeigt. Hierbei ist sowohl der Verteiler 2 als auch der Sammler 3 rohrförmig über der gesamten Breite 5 des flexiblen Elements 4, hier als Absorbermatte ausgeführt, angeordnet.

Fig. 2 zeigt eine perspektivische Darstellung eines flächigen flexiblen Wärmeübertragungselements 1 mit einem Verteiler 2 und einem Sammler 3, die an entgegengesetzten Seiten des flexiblen Elements 4 angeordnet sind. Die Flexibilität des Wärmeübertragungselements 1 bietet den Vorteil, dass sich das Wärmeübertragungselement 1 seiner Umgebung optimal anpassen kann und somit zum einen ein Einbau, beispielsweise in das Erdreich, erleichtert und zum anderen eine Beschädigung des flexiblen Elements 4 des Wärmeübertragungselements 1 verhindert.

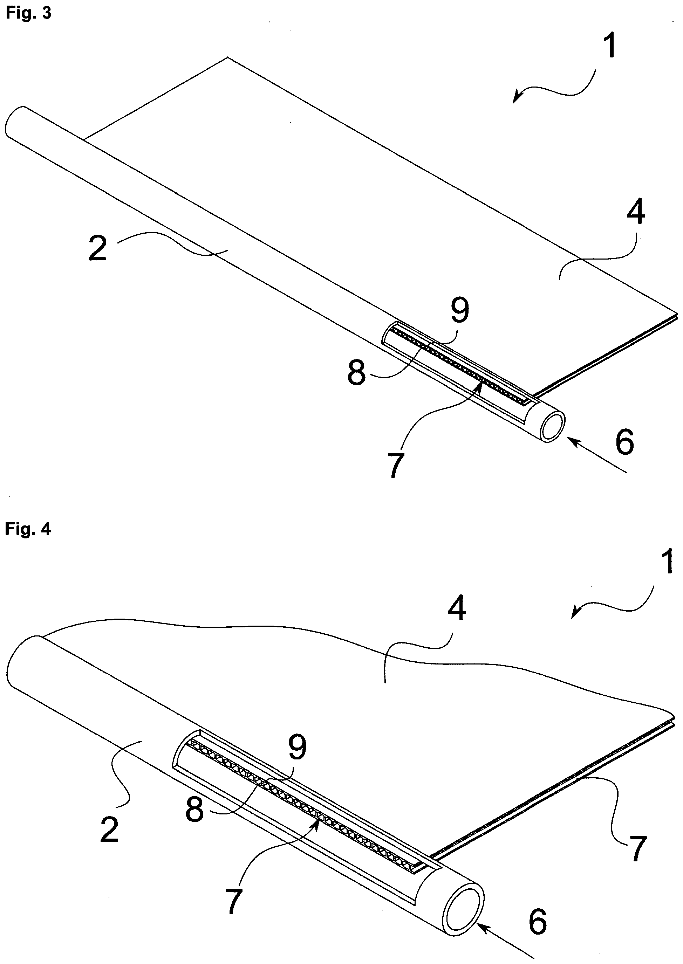

In Fig. 3 wird eine perspektivische Darstellung des flexiblen Elements 4 und des Verteilers 2, hier beispielsweise ein Verteiler- oder Anschlussrohr, eines Wärmeübertragungselements 1 gezeigt. Dem hier dargestellten Verteiler 2 entspricht ein am entgegengesetzten Ende des flexiblen Elements 4 angeordneter hier nicht dargestellter Sammler 3, beispielsweise ein Sammelrohr, wie in den Fign. 1 und 2 bereits zuvor erläutert. Das Wärmeträgermedium strömt in Richtung des Pfeils 6 in den Verteiler 2 und von dort in die Strömungskanäle 7 des flexiblen Elements 4, hier beispielsweise eine flächige flexible Absorbermatte, und wird durch den Sammler 3 am anderen Ende des flexiblen Elements 4 aufgenommen. Das flexible Element 4 mit einer Breite 5 ist insbesondere aus einem Kunststoff gefertigt, zum Beispiel durch Extrusion, wobei die Wandstärke der inneren Wand 8 und der äußeren Wand 9 des flexiblen Elements 4 dünn ausgeführt sind, so dass ein verbesserter Wärmeüber- und -durchgang zur Umgebung erzielt wird, wodurch die Restwärme zum Beispiel des Erdreichs optimal genutzt werden kann. Die Strömungskanäle 7 des flexiblen Elements 4 sind vorzugsweise als Kapillarkanäle ausgestaltet.

Eine Detailansicht der in Fig. 3 gezeigten perspektivischen Darstellung des flexiblen Elements 4 des Verteilers 2 bzw. des hier nicht gezeigten Sammlers 3 eines Wärmeübertragungselements 1 wird in Fig. 4 dargestellt. Der Aufriss zeigt die Anbindung des flexiblen Elements 4 an den Verteiler 2 bzw. den Sammler 3 sowie die Strömungskanäle 7 in vergrößerter Darstellung.

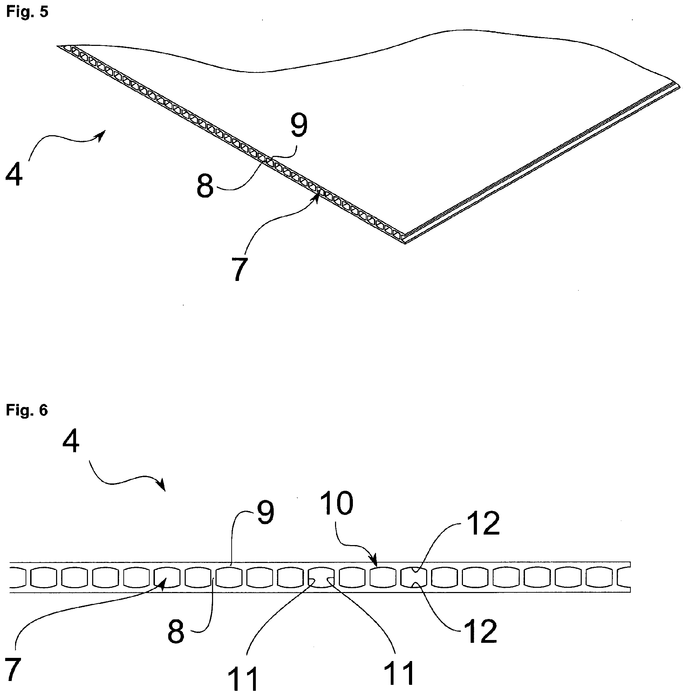

In der Fig. 5 wird eine perspektivische Detaildarstellung des flexiblen Elements 4 eines Wärmeübertragungselements 1 mit Strömungskanälen 7 gezeigt. In der dargestellten Form des flexiblen Elements 4 sind die Strömungskanäle 7 parallel zu einander angeordnet, so dass das Wärmeträgermedium nach dem Eintritt in den hier nicht gezeigten Verteiler 2 parallel durch die Strömungskanäle 7 des flexiblen Elements 4 strömt. Darüber hinaus ist es möglich, dass die Strömungskanäle 7 mäanderförmig im flexiblen Element 4 des Wärmeübertragungselements 1 angeordnet sind. Hierbei können mehrere Mäander parallel im flexiblen Element 4 angeordnet sein und parallel durchströmt werden. Außerdem ist es ebenso möglich, dass nur ein einzelner Mäander im flexiblen Element 4 angeordnet ist. Die Längsseite des flexiblen Elements 4, beispielsweise ein flexibler plattenförmiger Hohlkörper, ist verschlossen.

Fig. 6 zeigt einen Schnitt durch die X-X-Ebene des in Fig. 5 dargestellten flexiblen Elements 4 eines Wärmeübertragungselements 1. Die Strömungskanäle 7 haben hier die Form eines abgerundeten Rechtecks 10. Hierbei sind die vertikalen Kanten 11 parallel zueinander angeordnet und mit zwei Bögen 12 miteinander zu einem abgerundeten Rechteck 10 verbunden. Die Form der Strömungskanäle 7 ist jedoch variabel. Hier sind alle beliebigen Formen, wie Kreise oder dgl., denkbar. Fig. 6 zeigt darüber hinaus die dünnen inneren Wände 8 und die dünnen äußeren Wände 9 des flexiblen Elements 4, die einen optimalen Wärmeübergang und Wärmedurchgang zur Umgebung ermöglichen.

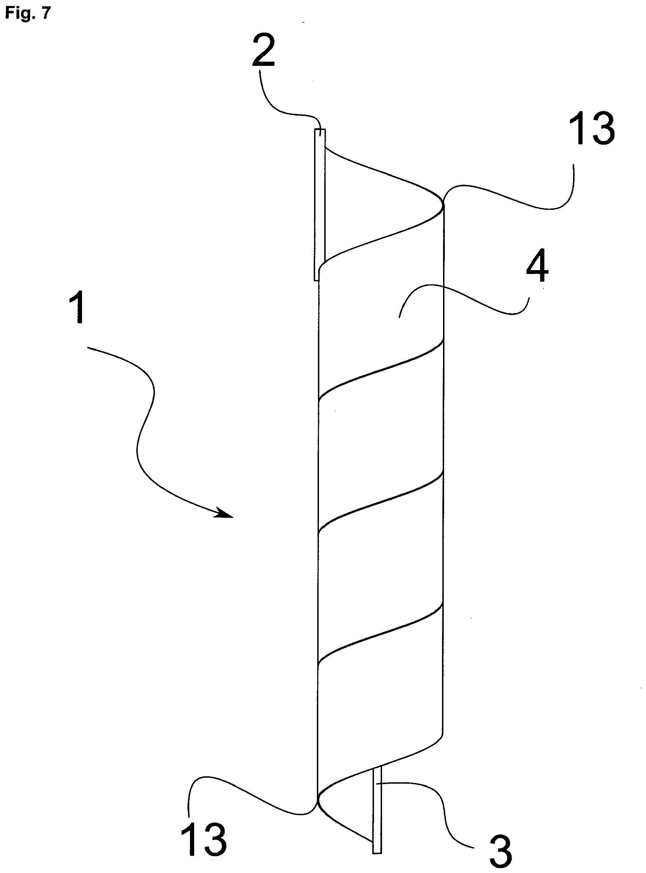

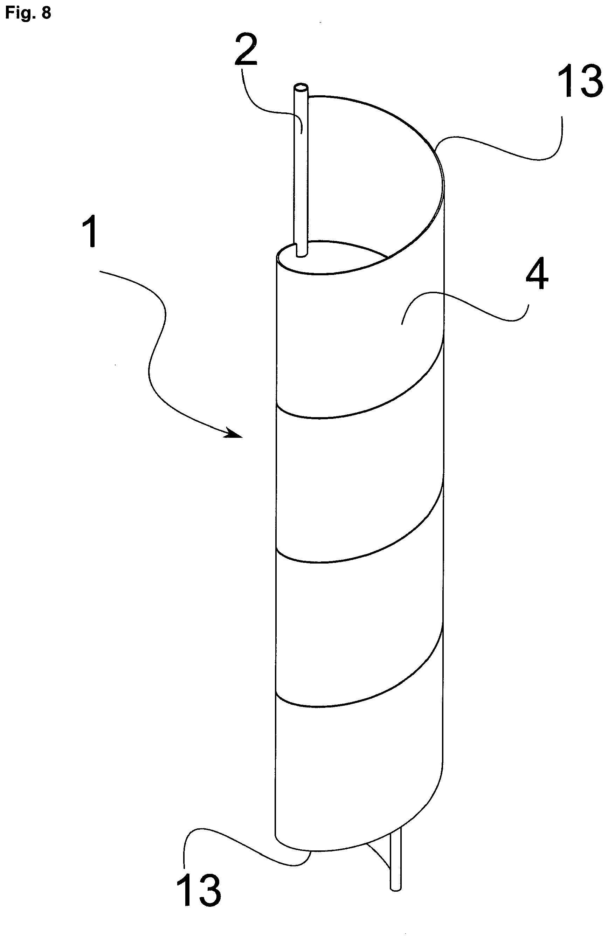

Fig. 7 zeigt eine Seitenansicht eines Wärmeübertragungselements 1 als Spiralabsorber ohne Abstand der Wicklungen. Fig. 8 zeigt die dazugehörige perspektivische Darstellung eines Wärmeübertragungselements 1 als Spiralabsorber ohne Abstand der Wicklungen. Die Wärmeübertragungselemente 1 sind als Wärmetauscher im Erdreich, in Tanks oder sonstigen Behältern, frei oder in einem Rahmen angeordnet für Luft- oder fließende und stehende Gewässer bzw. Medien einsetzbar. Die feste Verbindung als Rohr erfolgt vorzugsweise durch Verschweißen der sich aufgrund der Spiralform gegenüberstehenden Längsseiten 13 des Wärmeübertragungselements 1. Das flexible Element 4 des Wärmeübertragungselements 1 ist hierbei aufgewickelt, wobei der mindestens eine Verteiler 2 einen Versatz in Richtung der Breite 5 des flexiblen Elements 4 des Wärmeübertragungselements 1 zum mindestens einen Sammler 3 aufweist. Durch eine derartige Streckung des aufgewickelten Wärmeübertragungselements 1 weist dieses bei einem Einbau im Erdreich einen sehr geringen auf die Erdoberfläche projizierten Flächenbedarf auf. Dennoch ist der Wärmeübergang aufgrund der überall an der Wärmeübertragungsfläche des Wärmeübertragungselements 1 hohen Temperaturdifferenz zur Umgebung optimal.

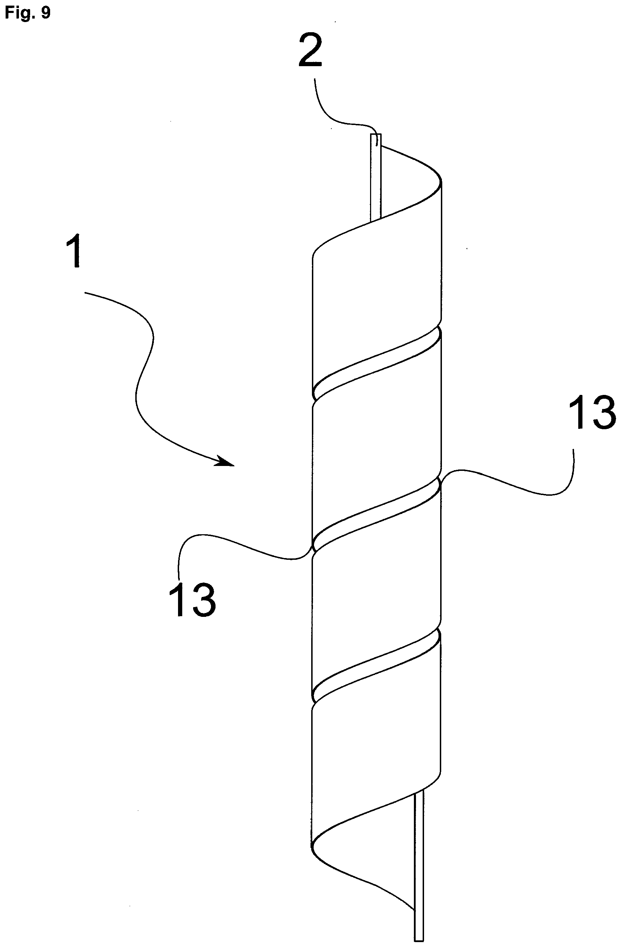

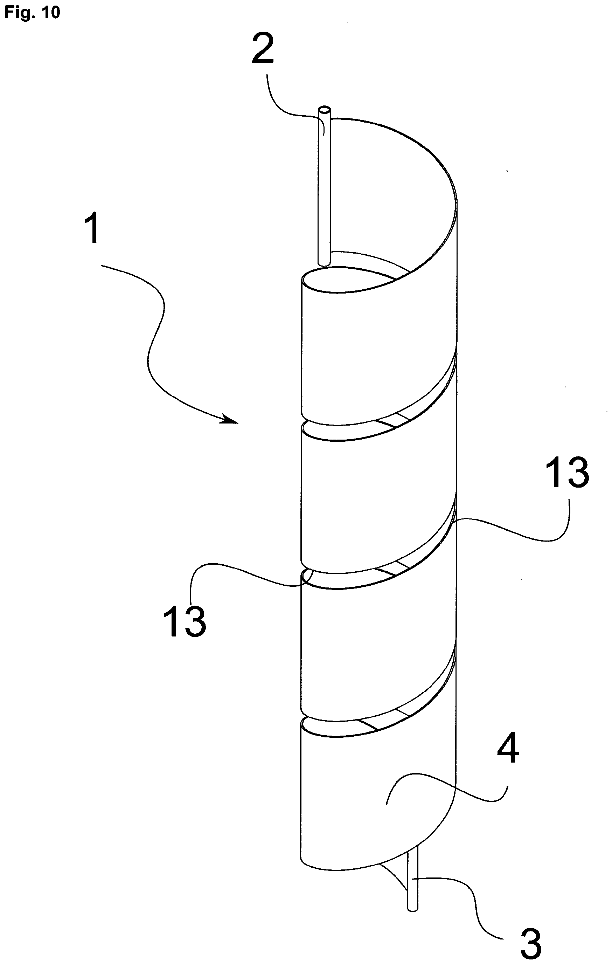

In den Fign. 9 und 10 werden dagegen eine Seitenansicht eines Wärmeübertragungselements 1 als Spiralabsorber mit Abstand der Wicklungen, d. h. nicht verbunden oder aber mit Fixierelementen auf Abstand verbunden, und eine perspektivische Darstellung eines Wärmeübertragungselements 1 als Spiralabsorber mit Abstand der Wicklungen dargestellt.

Die in den Fign. 7 bis 10 gezeigten Spiralabsorber können in einer beliebigen Anordnung zusammengeschlossen installiert werden, beispielsweise übereinander, nebeneinander oder über- und nebeneinander. Bevorzugt sind der Verteiler 2 und der Sammler 3 parallel zu einer durch das Wärmeübertragungselemente 1 verlaufenden Längsachse angeordnet. Darüber hinaus sind an den Spiralabsorbern Sicherungslaschen angeordnet, die ein Einbringen in das Erdreich erleichtern. Neben einem vertikalen Einbau ist auch ein horizontaler Einbau der Spiralabsorber möglich.

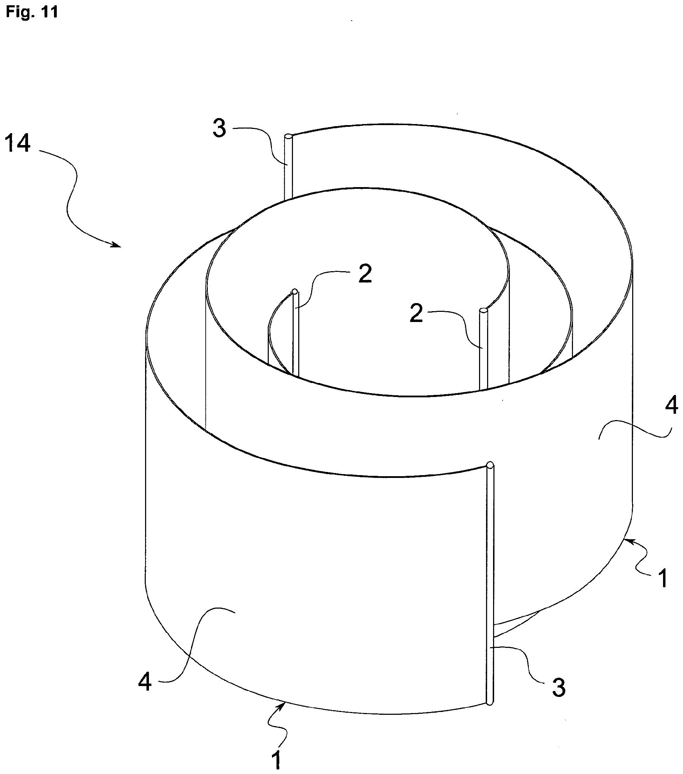

Eine perspektivische Darstellung zweier aufgewickelter Wärmeübertragungselemente 1 als Wärmetauschereinheit 14 wird in Fig. 11 dargestellt. Hierbei sind die Verteiler 2 innen an dem flexiblen Element 4 des jeweiligen Wärmeübertragungselements 1 angeordnet. Die Sammler 3 sind dagegen im äußeren Bereich der Wärmetauschereinheit 14 an den Wärmeübertragungselementen 1 angeordnet.

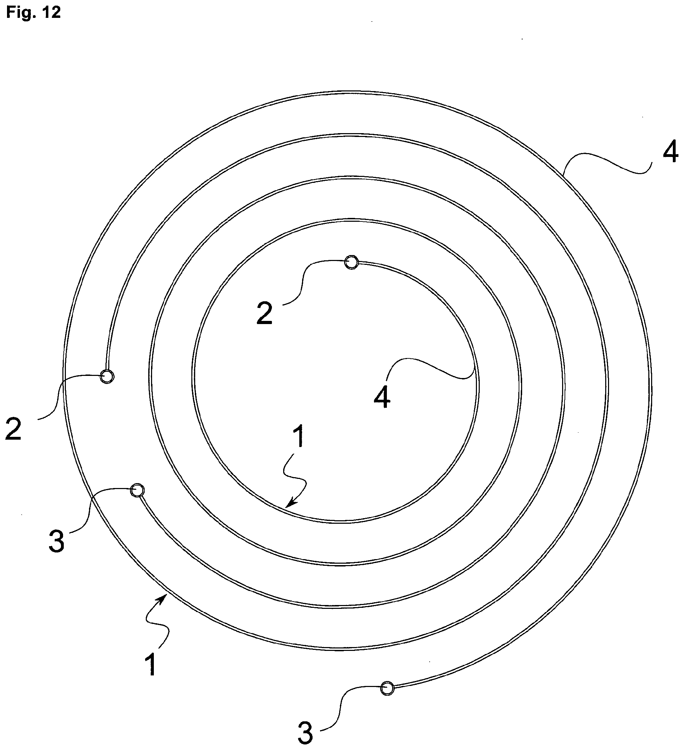

Fig. 12 zeigt eine Draufsicht zweier aufgewickelter Wärmeübertragungselemente 1 als Wärmetauschereinheit 14. Hierbei ist das innere Wärmeübertragungselement 1 in zweieindreiviertel Wicklungen und das äußere Wärmeübertragungselement 1 in eineindreiviertel Wicklungen ausgeführt.

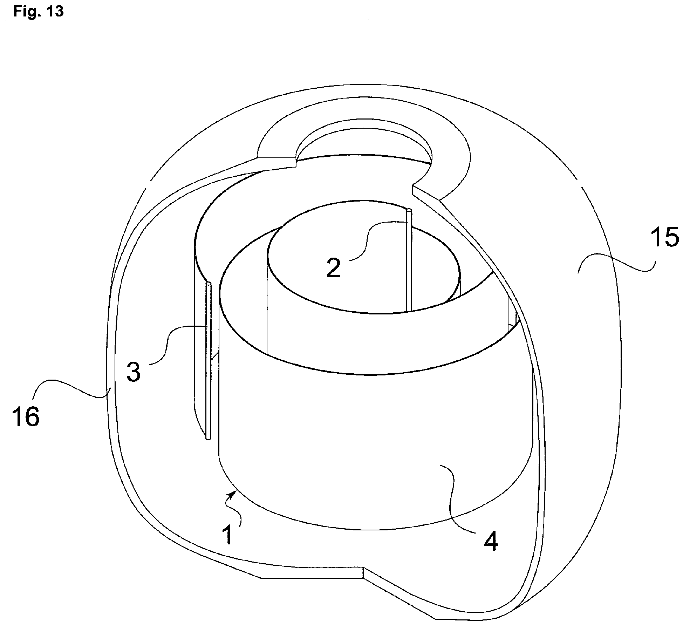

In der Fig. 13 wird eine perspektivische Darstellung eines Wärmeübertragungselements 1 als Anwendung in einem Behälter 15 als Zisternen- oder Eisspeicher gezeigt. Der Behälter 15 ist mit einem Wärmeträgermedium gefüllt und sehr gut gegen die Umgebung, beispielsweise das Erdreich, isoliert, damit die Wärme im Behälter 15 gut gespeichert werden kann. Die Wärmeübertragungselemente 1 sind in dem Behälter 15 so angeordnet, dass diese keine Wärmebrücken hin zur Wand 16 des Behälters 15 ausbilden.

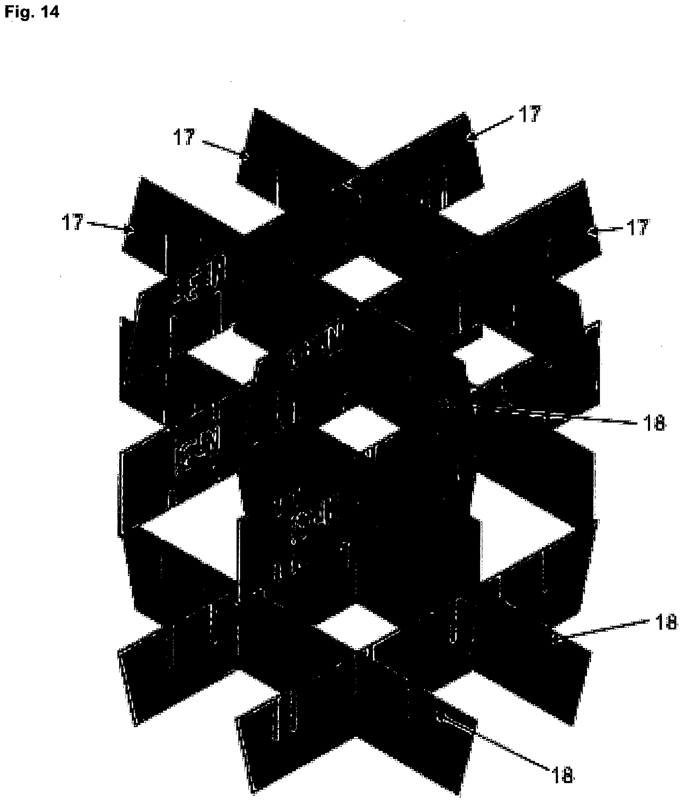

In der Fig. 14 sind Steckplatten 17 zur Anordnung von hier nicht dargestellten Wärmeübertragungselementen 1 in einem Behälter 15 in einer perspektivischen Darstellung gezeigt. Die Steckplatten 17 sind alle für einen einfachen Aufbau nummeriert und haben Aussparungen 18 für die Aufnahme von Wärmeübertragungselementen 1. Der Aufbau der Steckplatten 17 dient zur Positionierung der Wärmeübertragungselemente 1 in einem Behälter 15, die zusammen einen Energiespeicher darstellen.

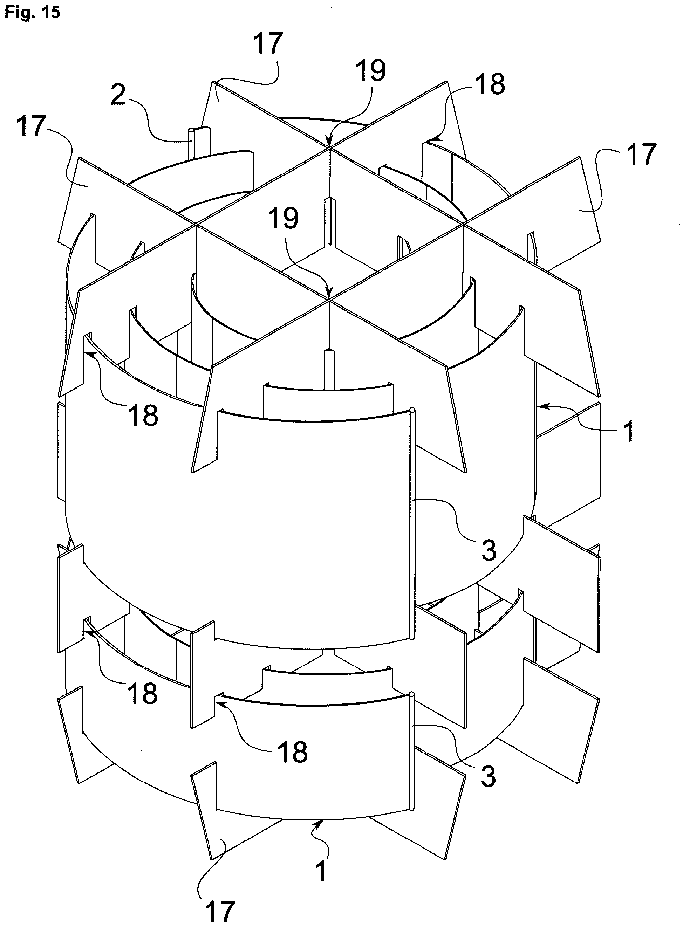

In Fig. 15 ist eine perspektivische Darstellung eines Wärmeübertragungselements 1 eines Energiespeichers gemäß der Erfindung als Kombination mehrerer Wicklungen ineinander und übereinander sowie deren Fixierung mittels Steckplatten 17 dargestellt. Die Steckplatten 17 sind aus einem isolierenden Material ausgeführt, so dass, wie in der Beschreibung zu Fig. 13 bereits erläutert, keine Wärmebrücken hin zur Wand 16 des Behälters 15 entstehen. Zuerst werden für den Aufbau des Energiespeichers vier Steckplatten 17 in einer untersten Ebene zusammengesteckt. Alle Steckplatten 17 sind, wie in Fig. 14 gezeigt, hierzu mit fortlaufenden Zahlen markiert. Die Steckplatten 17 sind an der Stelle der beiden korrespondieren Zahlen zusammenzufügen. Anschließend wird ein erstes Wärmeübertragungselement 1 in die Aussparungen 18 der unteren Ebene an Steckplatten 17 von außen nach innen hineingewickelt. Auch die Wärmeübertragungselemente 1 und die Steckplatten 17 sind dafür mit je zwei korrespondieren Zahlen markiert, so dass der Beginn der Wicklung eindeutig markiert ist. Anschließend wird ein zweites Wärmeübertragungselement 1, wie in den Fign. 11 und 12 gezeigt, in das erste Wärmeübertragungselement 1 und die unterste Ebene an Steckplatten 17 hineingewickelt. Danach wird die zweite Ebene bestehend aus weiteren vier Steckplatten 17 auf die gewickelten Wärmeübertragungselemente 1 aufgesteckt. Auch diese Steckplatten 17 sind zur korrekten Verarbeitung nummeriert. Nun wird ein drittes und viertes Wärmeübertragungselement 1, hier beispielsweise von unterschiedlicher Größe als die ersten beiden Wärmeübertragungselemente 1, eingebaut, wobei die Positionen der Wärmeübertragungselemente 1 denen in der ersten Ebene entspricht. Zum Abschluss werden weitere vier Steckplatten 17 auf die zweite Ebene an Wärmeübertragungselementen 1 aufgesteckt, so dass das Gesamtsystem eine stabile Einheit bildet. Jedes Wärmeübertragungselement 1 wird nun über seine Verteiler 2 einzeln auf die Verteiler des Gesamtsystems angeschlossen. Hierbei ist zu beachten, dass die Verrohrung so angeordnet ist, dass innen das kalte Wärmeträgermedium einströmt und außen das aufgewärmte Wärmeträgermedium zurück fließt, beispielsweise zu einer Wärmepumpe. Zuletzt werden nicht näher dargestellte Profile 19, beispielswiese PP-U-Profile, in die Ecken der Steckplatten 17 des Gesamtsystems geschraubt, die sich an der Decke bzw. der Wand 16 des Behälters 15 abstützen müssen, damit ein Aufschwimmen des Gesamtsystems im Behälter 15 bei beispielsweise Eisbildung verhindert wird. Die Verteiler für den Vor- und Rücklauf werden vorzugsweise mit Rohrschellen an der Decke oder Wand 16 des Behälters 15 montiert. Somit ist das Gesamtsystem mittels einer Schablonentechnik miteinander fixiert und der Energiespeicher gefertigt.

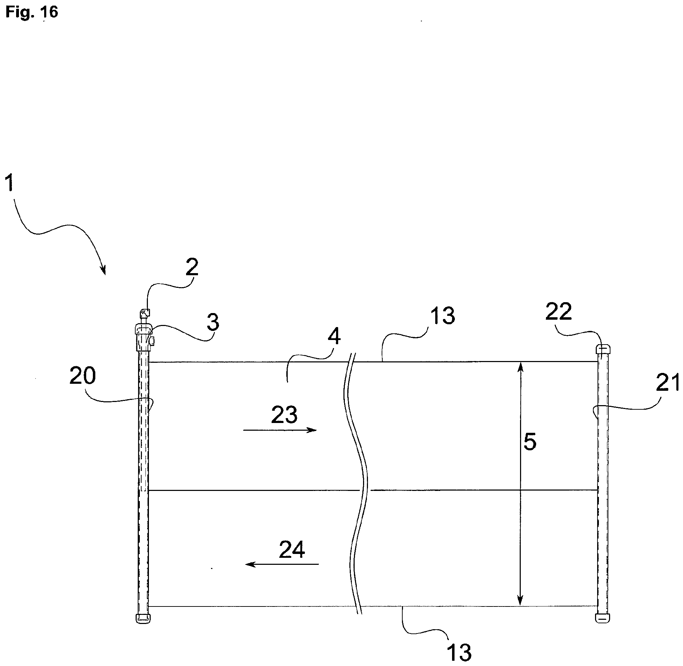

Fig.16 zeigt eine Seitenansicht eines Wärmeübertragungselements 1 mit einem Verteiler 2 und einem Sammler 3, die an einer Stirnseite 20 des flexiblen Elements 4 angeordnet sind. Das flexible Element 4 weist eine Breite 5 und zwei Längsseiten 13 auf. An einer der Stirnseite 20 gegenüberliegenden Stirnseite 21 des flexiblen Elements 4 ist ein geschlossenes Verbindungselement 22 angeordnet, welches die in Fig. 4 dargestellten Strömungskanäle 7 miteinander verbindet. In diesem Ausführungsbeispiel strömt das Wärmeträgermedium in den Verteiler 2 ein und wird von diesem auf die in Fig. 4 dargestellten Strömungskanäle 7 verteilt, dabei ist die Strömungsrichtung durch den Pfeil 23 gekennzeichnet. An der Stirnseite 21 gelangt das Wärmeträgermedium in das geschlossene Verbindungselement 22, welches das Wärmeträgermedium auf die in Fig. 4 dargestellten Strömungskanäle 7 verteilt, durch welche das Wärmeträgermedium in die durch den Pfeil 24 gekennzeichnete Richtung strömt. Somit strömt das Wärmeträgermedium in den Sammler 3 und wird aus dem Wärmeübertragungselement 1 hinausgeleitet.

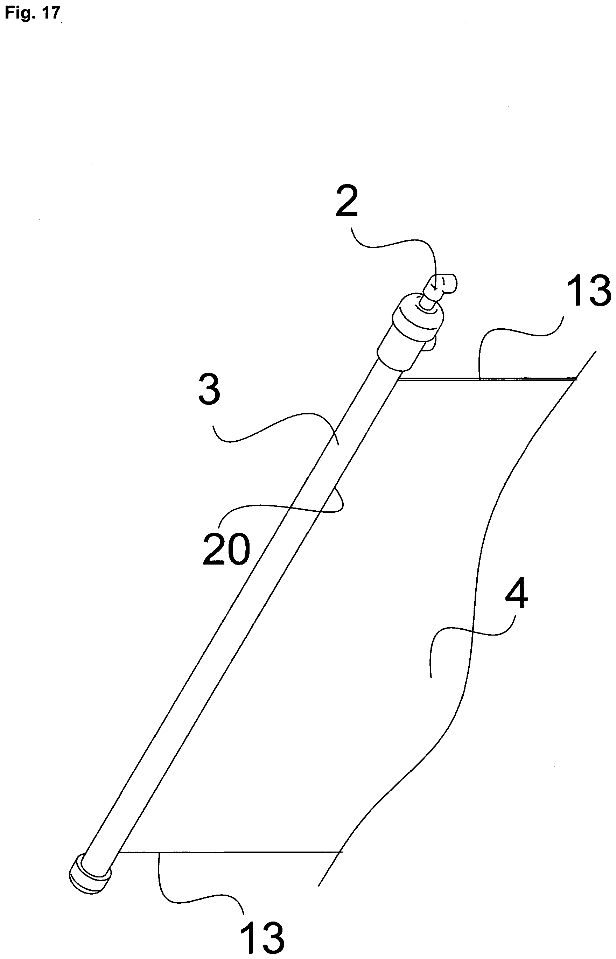

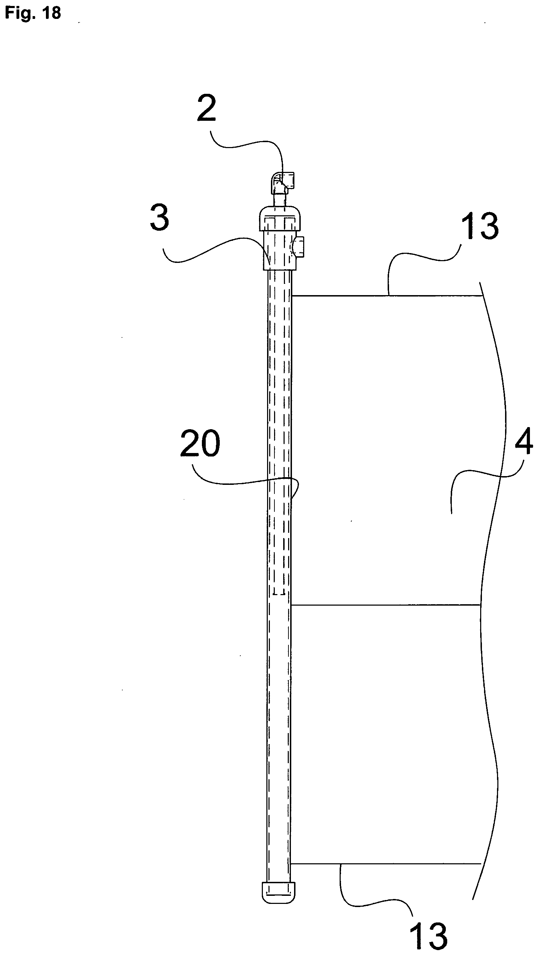

Fig. 17 und Fig. 18 zeigen eine perspektivische Ansicht und eine Seitenansicht eines Ausschnittes des Wärmeübertragungselements 1, gemäß Fig. 16.

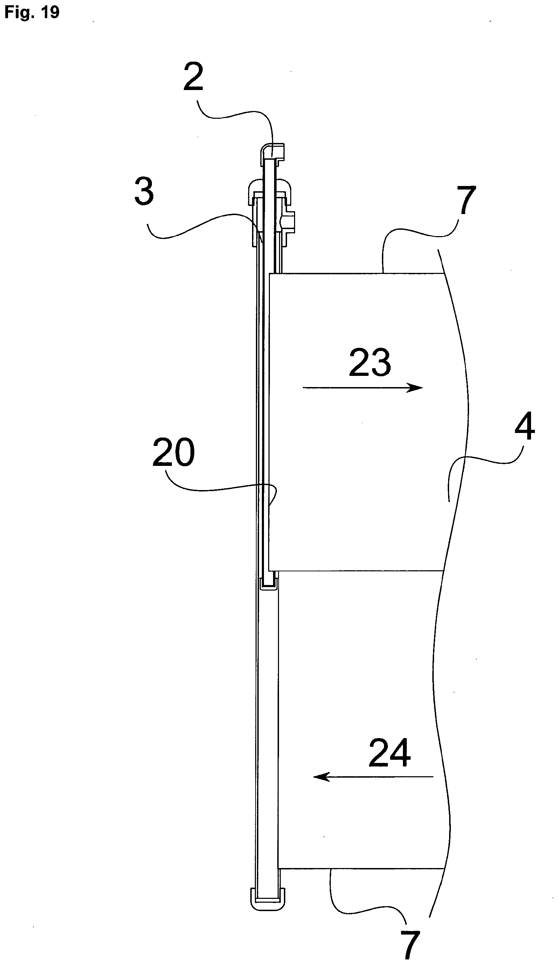

Fig. 19 zeigt eine Schnittansicht auf einen Ausschnitt des Wärmeübertragungselements 1, gemäß Fig. 16. In diesem Ausführungsbeispiel sind der Verteiler 2 und der Sammler 3 in axial ineinander angeordneter Bauweise als ein Bauteil ausgeführt. Das Wärmeträgermedium strömt in den Verteiler 2 und von dort in die in Fig. 4 dargestellten Strömungskanäle 7, die innerhalb des oberen Teils des flexiblen Elements 4 angeordnet sind. Die Strömungsrichtung des Wärmemediums ist mit dem Pfeil 23 gekennzeichnet. Der Rücklauf des Wärmeträgermediums geschieht über das in Fig. 16 dargestellte Verbindungselement 22, welches das Wärmeträgermedium auf die in Fig. 4 dargestellten Strömungskanäle 7, die innerhalb des unteren Teils des flexiblen Elements 4 angeordnet sind, in die mit dem Pfeil 24 gekennzeichnete Richtung verteilt. Das Wärmeträgermedium strömt dann in den Sammler 3, von wo aus es aus dem Wärmeübertragungselement 1 hinausgeleitet wird.

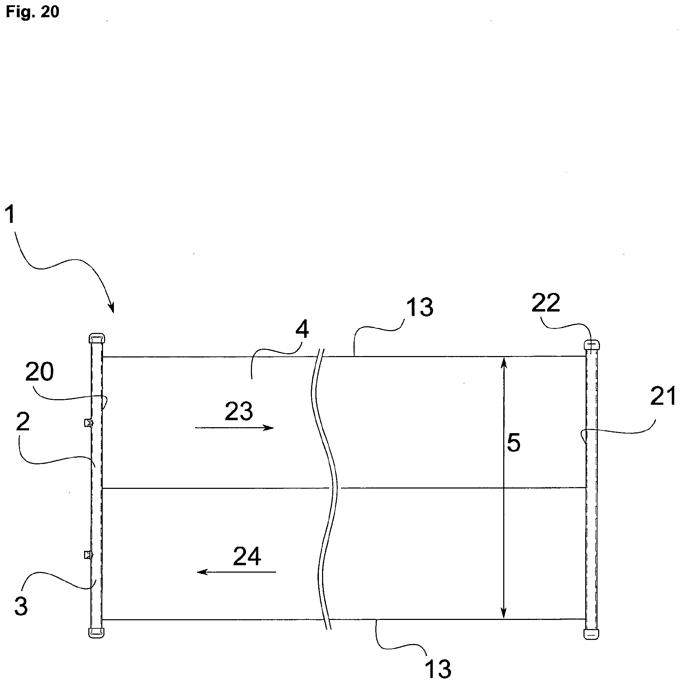

Fig. 20 zeigt eine Seitenansicht eines weiteren Ausführungsbeispiels eines Wärmeübertragungselements 1. Hier sind der Verteiler 2 und der Sammler 3 axial fluchtend zueinander angeordnet. Der Vorteil an dieser Anordnung ist, dass der Wärmetransfer nach dem Gegenstromprinzip zwischen dem Verteiler 2 und dem Sammler 3 vermieden wird.

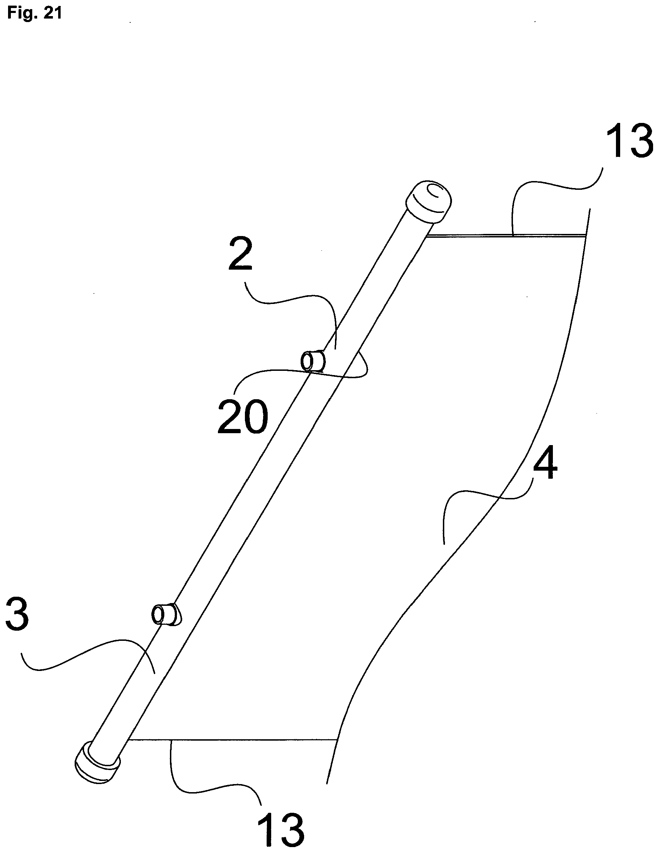

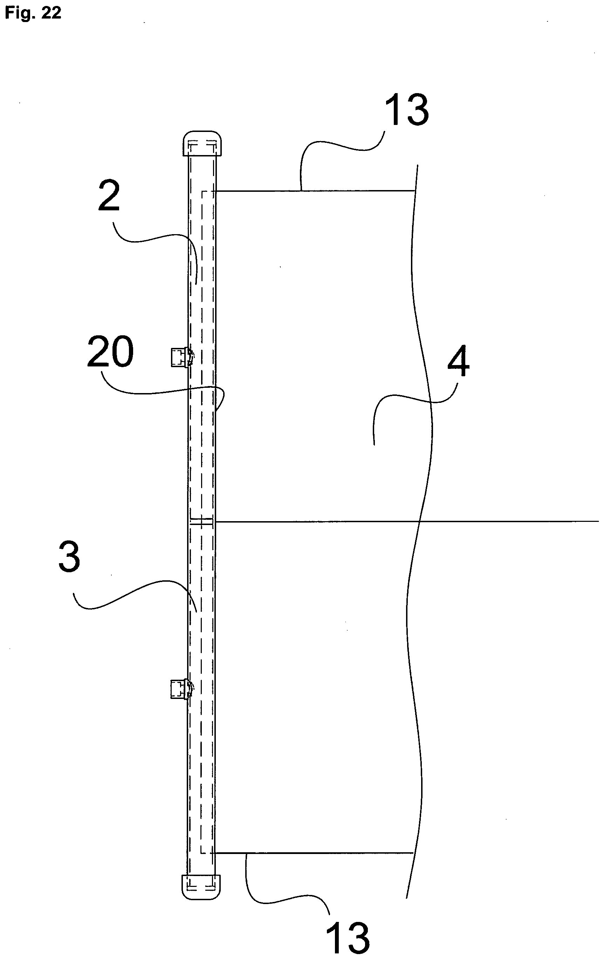

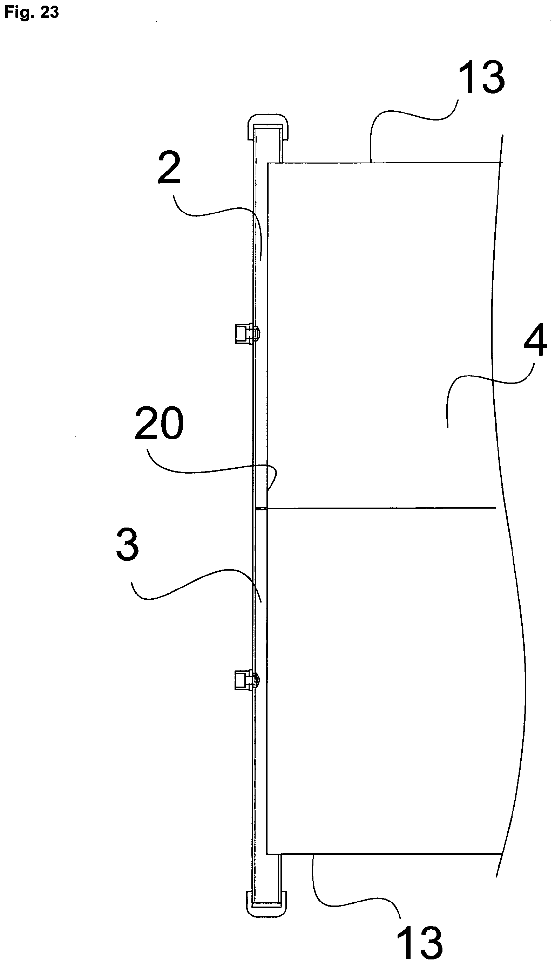

Fig. 21 bis Fig. 23 zeigen eine perspektivische Ansicht, eine Seitenansicht und eine Schnittansicht eines Ausschnittes des Wärmeübertragungselements 1, gemäß Fig. 20.

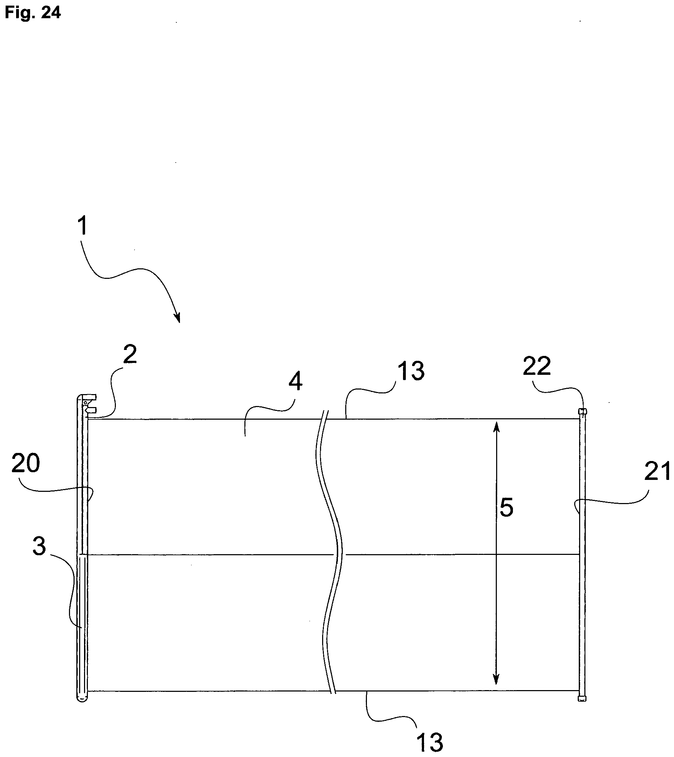

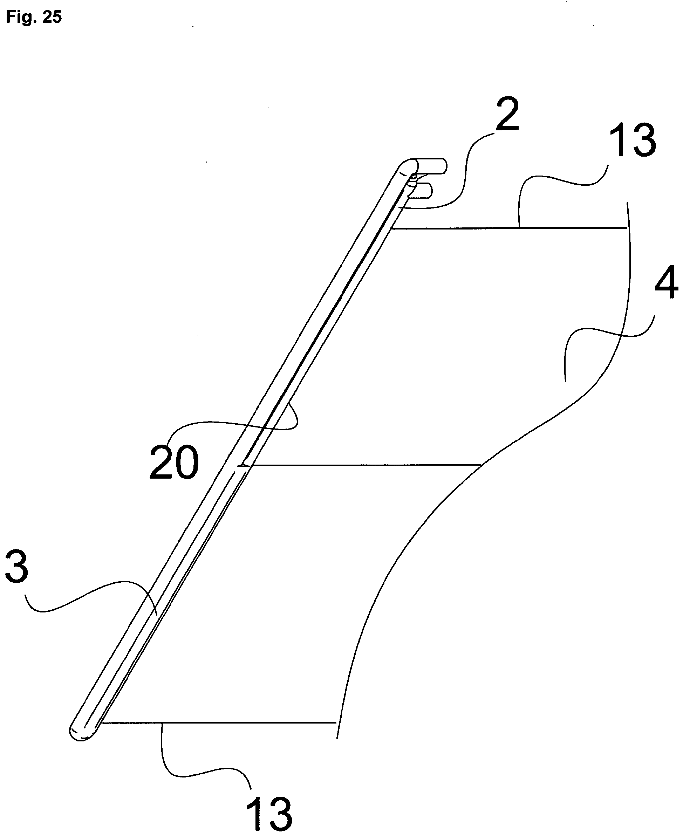

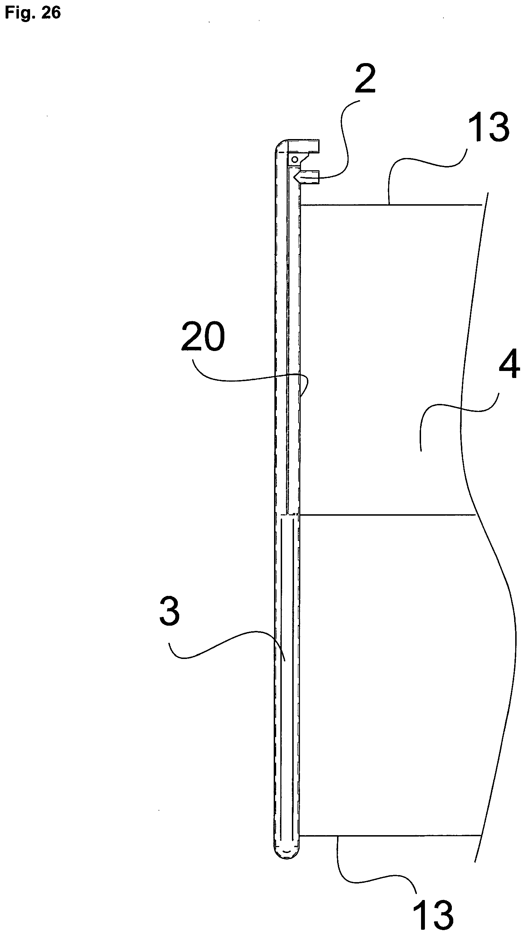

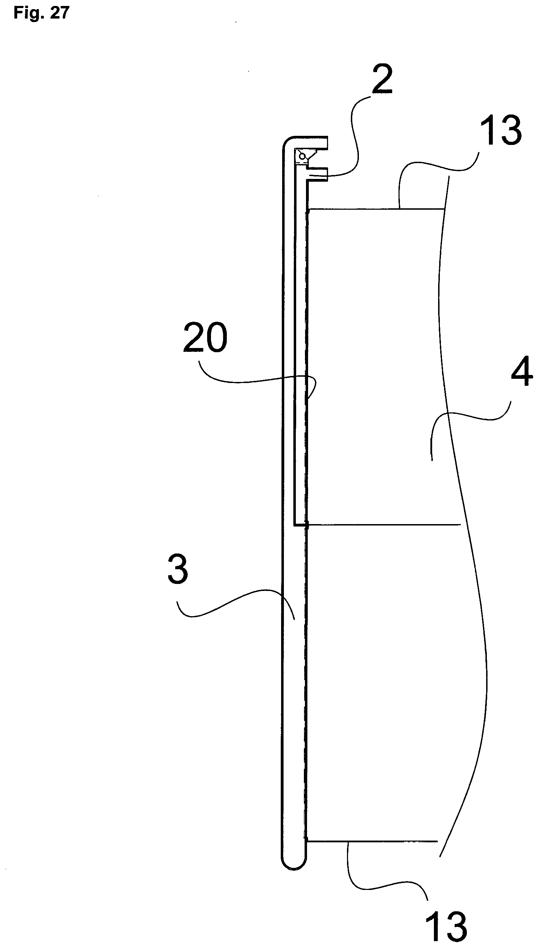

Fig. 24 bis Fig. 27 zeigen eine Seitenansicht, eine perspektivische Ansicht eines Ausschnittes, eine Seitenansicht eines Ausschnittes und eine Schnittansicht auf einen Ausschnitt eines weiteren Ausführungsbeispiels eines Wärmeübertragungselements 1, bei dem die beiden Längsachsen des Verteilers 2 und des Sammlers 3 keine gemeinsame Längsachse bilden.

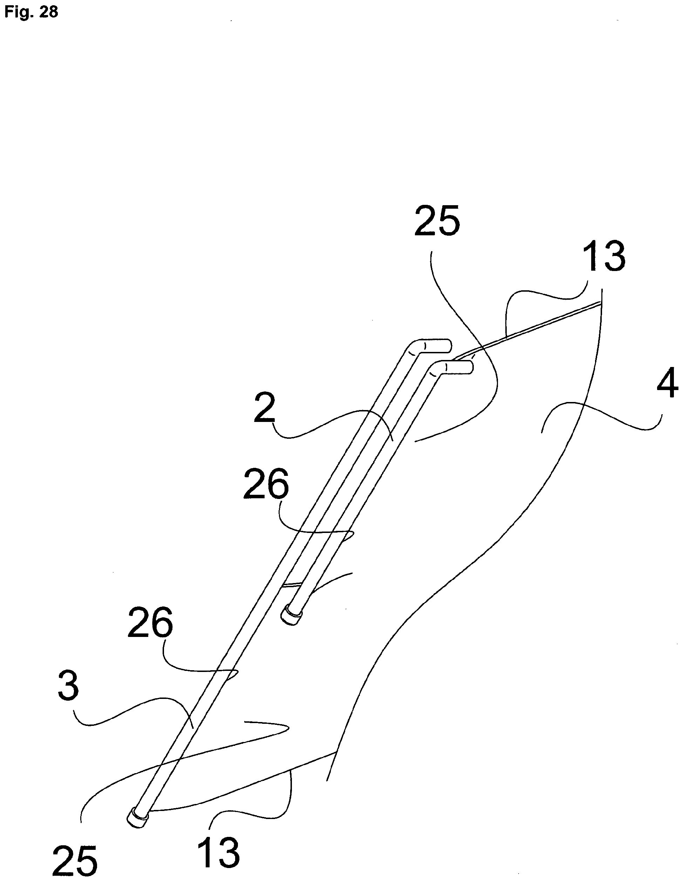

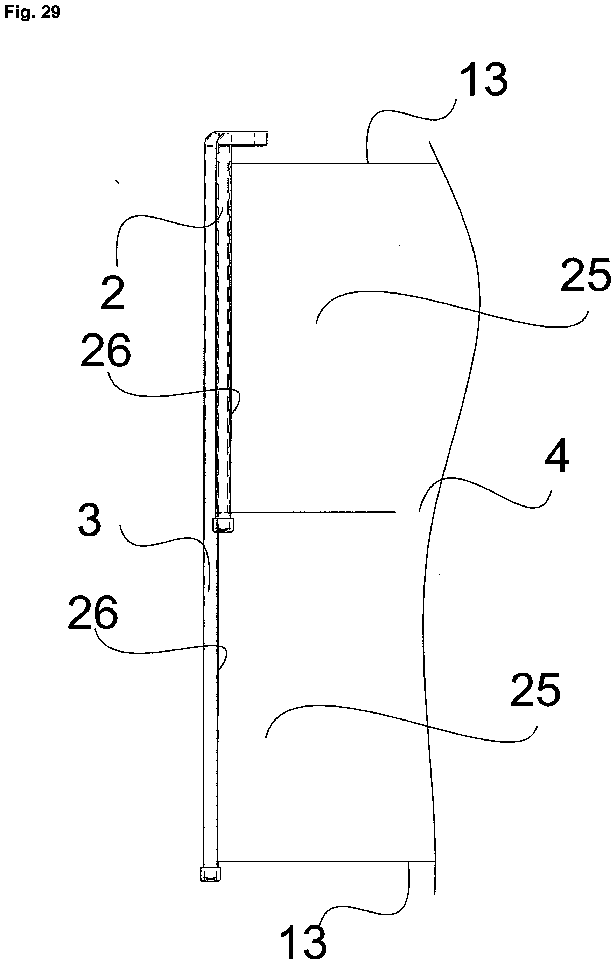

Fig. 28 und Fig. 29 zeigen eine perspektivische Ansicht und eine Seitenansicht eines Ausschnittes eines weiteren Ausführungsbeispiels eines Wärmeübertragungselements 1. In diesem Ausführungsbeispiel ist das flexible Element 4 teilweise in zwei Elemente 25 geteilt, so dass der Verteiler 2 an der Stirnseite 26 von einem Element 25 und der Sammler 3 an der Stirnseite 26 von dem zweiten Element 25 angeordnet sind. Dabei bilden die Stirnseiten 26 der beiden Elemente 25 die Stirnseite 20 des flexiblen Elements 4. Auf diese Weise ist die Strömungsrichtung des Wärmeträgermediums innerhalb eines Elements 25 die gleiche. Durch das Variieren des Abstandes zwischen den Elementen 25 kann man den unerwünschten Wärmetransfer zwischen den Elementen 25 minimieren. Dasselbe gilt für das Variieren des Abstandes zwischen dem Verteiler 2 und dem Sammler 3.

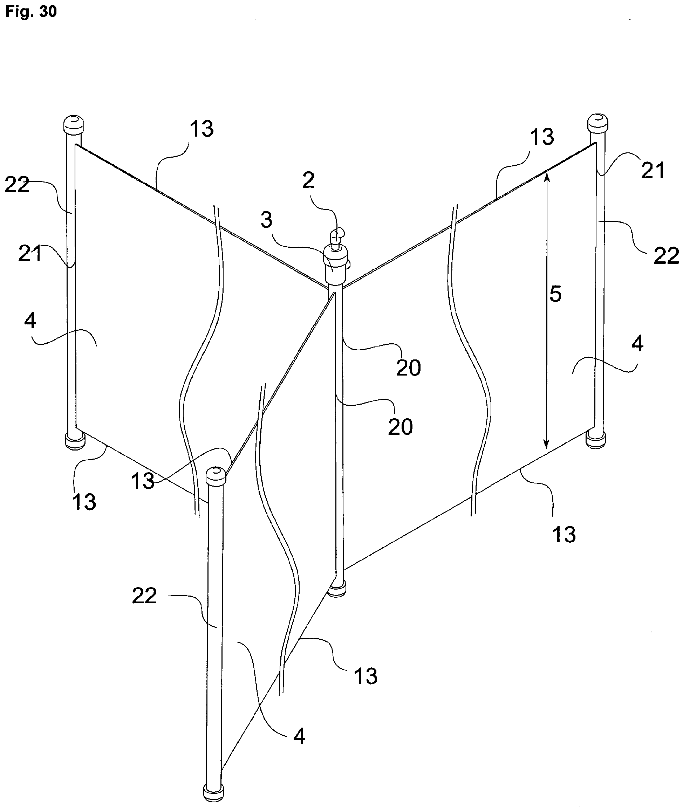

Fig. 30 zeigt eine perspektivische Ansicht auf ein weiteres Ausführungsbeispiel eines Wärmeübertragungselements 1. In diesem Ausführungsbeispiel sind drei flexible Elemente 4 an dem Verteiler 2 bzw. Sammler 3 angeordnet. Durch den möglichst großen Abstand der einzelnen flexiblen Elemente 4 zueinander wird der Wärmetransfer zwischen diesen minimiert und somit die Effizienz des Wärmeübertragungselements 1 gesteigert. Die flexiblen Elemente 4 können auch beispielsweise gekrümmt werden, so dass verschiedene Anordnungen denkbar sind, die sich beispielsweise durch den zur Verfügung stehenden Platz bedingen.

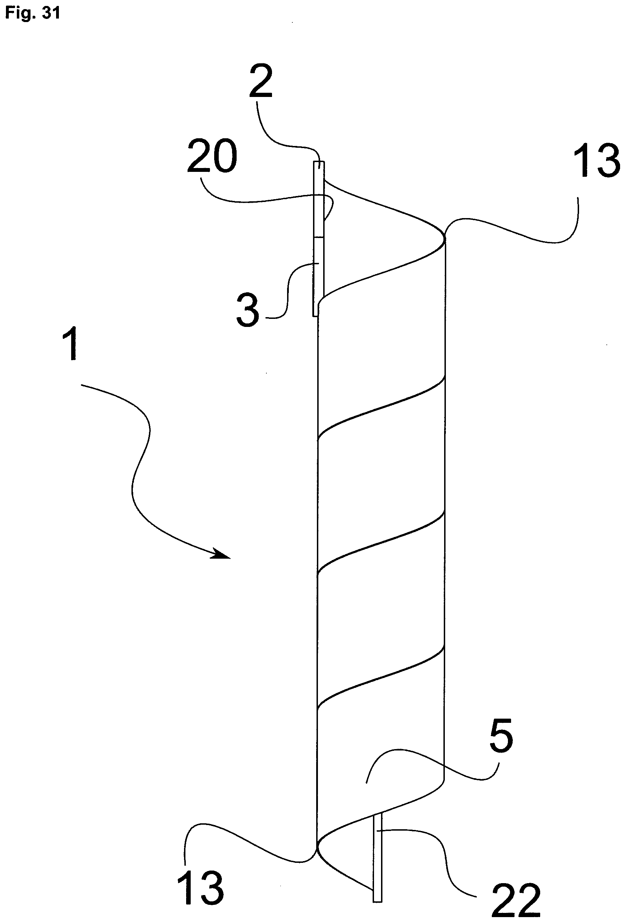

Fig. 31 zeigt eine Seitenansicht eines weiteren Ausführungsbeispiels eines Wärmeübertragungselements 1. Hier ist das flexible Element 4 in einer schraubenförmigen Anordnung ausgeführt. Auf diese Weise wird der flächenmäßige Platzbedarf für die Installation reduziert. Durch diese Anordnung wird sichergestellt, dass der Temperaturgradient zwischen der Oberfläche des flexiblen Elements 4 und der Umgebung vergrößert wird, was die Effizienz des Wärmeübertragungselements 1 steigert. Des Weiteren ist für diese Anordnung notwendig den Winkel zwischen dem Verteiler 2 bzw. dem Sammler 3 und der Längsseite 13 des flexiblen Elements 4 der Art zu verändern, dass es aufgrund der Wicklungen zu keinen Spannungen im Wärmeübertragungselement 1 kommt.

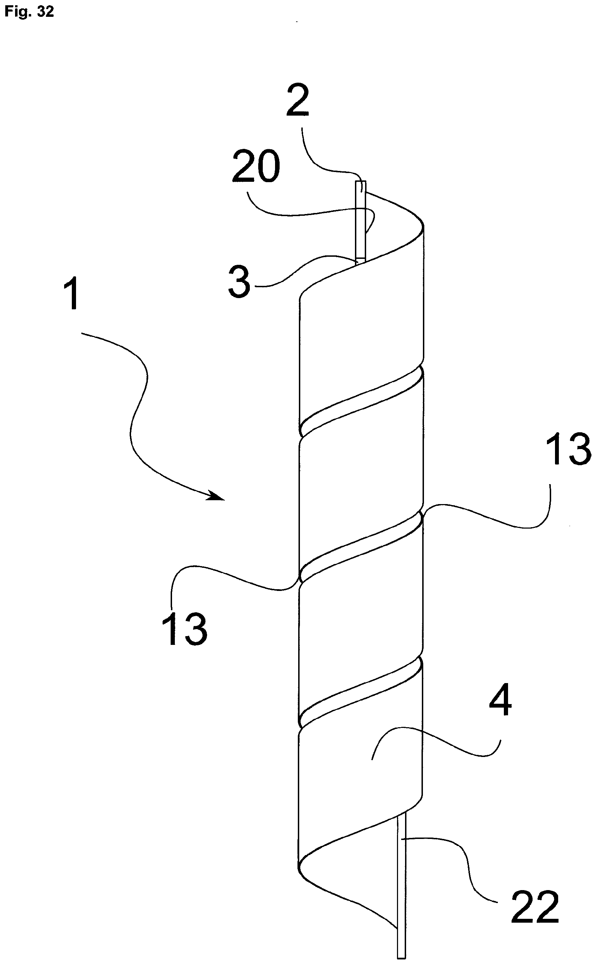

Fig. 32 zeigt eine Seitenansicht eines weiteren Ausführungsbeispiels eines Wärmeübertragungselements 1. Im Unterschied zu der in Fig. 31 beschriebenen Ausführung ist bei dieser Anordnung ein Abstand zwischen den einzelnen Wicklungen des flexiblen Elements 4. Dadurch wird der Wärmetransfer zwischen den einzelnen Wicklungen reduziert und somit die Effizienz des Wärmeübertragungselements 1 erhöht. Selbstverständlich ist neben einem vertikalen Einbau auch ein horizontaler Einbau des Wärmeübertragungselements 1 möglich.

Alle hier dargestellten Merkmale können sowohl einzeln als auch in beliebiger Kombination miteinander erfindungswesentlich sein.

### Bezugszahlenliste

- 1: Wärmeübertragungselement
- 2: Verteiler
- 3: Sammler
- 4: flexibles Element
- 5: Breite
- 6: Pfeil
- 7: Strömungskanal
- 8: innere Wand
- 9: äußere Wand
- 10: Rechteck
- 11: Kanten
- 12: Bogen
- 13: Längsseite
- 14: Wärmetauschereinheit
- 15: Behälter
- 16: Wand
- 17: Steckplatte
- 18: Aussparung
- 19: Profil
- 20: Stirnseite
- 21: Stirnseite
- 22: Verbindungselement
- 23: Pfeil
- 24: Pfeil
- 25: Element
- 26: Stirnseite

## Patentansprüche

1. Energiespeicher mit mindestens einem Behälter (15), in dem mehrere Wärmeübertragungselemente (1) angeordnet sind, wobei die Wärmeübertragungselemente (1) zumindest ein flexibles Element (4) aufweisen, an welchem mindestens ein Verteiler (2) und mindestens ein Sammler (3) angeordnet sind, wobei das flexible Element (4) mindestens einen Strömungskanal (7) und mindestens eine Krümmung aufweist,
**dadurch gekennzeichnet,**
**dass** vier Steckplatten (17) in einer untersten Ebene zusammengesteckt angeordnet sind, wobei mindestens zwei Wärmeübertragungselemente (1) auf der untersten Ebene der Steckplatten (17) aufgewickelt angeordnet sind,
und weitere vier Steckplatten (17) in einer zweiten Ebene auf den gewickelten Wärmeübertragungselementen (1) aufgesteckt angeordnet sind, wobei auch hier mindestens zwei Wärmeübertragungselemente (1) auf der zweiten Ebene der Steckplatten (17) aufgewickelt angeordnet sind,
und weitere vier Steckplatten (17) in einer dritten Ebene auf der zweiten Ebene der gewickelten Wärmeübertragungselemente (1) aufgesteckt angeordnet sind und an mindestens einer Steckplatte (17) ein Profil (19) angeordnet ist.

2. Energiespeicher nach Anspruch 1,
**dadurch gekennzeichnet,**
**dass** mehrere aufgewickelte und mittels Aussparungen (18) in mindestens einer Steckplatte (17) im Behälter (15) angeordnete Wärmeübertragungselemente (1) im Behälter (15) übereinander angeordnet sind.

3. Energiespeicher nach Anspruch 1 oder Anspruch 2,
**dadurch gekennzeichnet,**
**dass** das Wärmeübertragungselement (1) ein Wärmeübertragungselement (1) ist mit zumindest einem flexiblen Element (4), an welchem mindestens ein Verteiler (2) und mindestens ein Sammler (3) angeordnet ist, wobei das flexible Element (4), welches mindestens eine Längsseite (13), mindestens eine Breite (5), mindestens einen Strömungskanal (7), mindestens eine Stirnseite und mindestens eine Krümmung aufweist, wobei das flexible Element (4) aufgewickelt ist, wodurch der mindestens eine Verteiler (2) einen Versatz in Richtung der Breite (5) des flexiblen Elements (4) des Wärmeübertragungselements (1) zum mindestens einen Sammler (3) aufweist.

4. Energiespeicher nach einem der vorhergehenden Ansprüche,
**dadurch gekennzeichnet,**
**dass** das Wärmeübertragungselement (1) Druckbelastungen aufnehmen kann.

5. Energiespeicher nach einem der vorhergehenden Ansprüche,
**dadurch gekennzeichnet,**
**dass** der mindestens eine Verteiler (2) und/oder der mindestens eine Sammler (3) zumindest teilweise flexibel sind.

6. Energiespeicher nach einem der vorhergehenden Ansprüche,
**dadurch gekennzeichnet,**
**dass** das Wärmeübertragungselement (1) zumindest teilweise aus Kunststoff ist.

7. Energiespeicher nach einem der vorhergehenden Ansprüche,
**dadurch gekennzeichnet,**
**dass** das flexible Element (4) zumindest teilweise aus Kunststoff ist.

8. Energiespeicher nach einem der vorhergehenden Ansprüche,
**dadurch gekennzeichnet,**
**dass** das flexible Element (4) in Form einer Matte ausgestaltet ist.

9. Energiespeicher nach einem der vorhergehenden Ansprüche,
**dadurch gekennzeichnet,**
**dass** der mindestens eine Strömungskanal (7) des flexiblen Elements (4) eine Kapillare ist.

10. Energiespeicher nach einem der vorhergehenden Ansprüche,
**dadurch gekennzeichnet,**
**dass** mindestens ein Verteiler (2) und mindestens ein Sammler (3) an derselben Stirnseite (20) des flexiblen Elements (4) angeordnet sind.

11. Energiespeicher nach einem der vorhergehenden Ansprüche,
**dadurch gekennzeichnet,**
**dass** mindestens ein Verteiler (2) und mindestens ein Sammler (3) zumindest teilweise axial fluchtend zueinander, zumindest teilweise parallel zueinander und/oder zumindest teilweise axial ineinander angeordnet sind.

12. Energiespeicher nach einem der vorhergehenden Ansprüche,
**dadurch gekennzeichnet,**
**dass** das flexible Element (4) mindestens zwei Stirnseiten (20, 21) aufweist, wobei mindestens eine Stirnseite (20) einen Versatz in Richtung der Breite (5) des flexiblen Elements (4) des Wärmeübertragungselements (1) zu mindestens einer anderen Stirnseite (21) aufweist.

13. Energiespeicher nach einem der vorhergehenden Ansprüche,
**dadurch gekennzeichnet,**
**dass** das flexible Element (4) zumindest teilweise in mindestens zwei Elemente (25), die jeweils eine Stirnseite (26) aufweisen, getrennt ist, wodurch die durch die Trennung gebildeten Stirnseiten (26) der Elemente (25) eine Stirnseite (20) des flexiblen Elements (4), an dem mindestens ein Sammler (3) und mindestens ein Verteiler (2) angeordnet sind, bilden.

14. Energiespeicher nach einem der vorhergehenden Ansprüche,
**dadurch gekennzeichnet,**
**dass** mindestens ein Verteiler (2) und mindestens ein Sammler (3), mindestens zwei Verteiler (2) und/oder mindestens zwei Sammler (3) aus einem Bauteil sind.

15. Energiespeicher nach einem der vorhergehenden Ansprüche,
**dadurch gekennzeichnet,**
**dass** an mindestens einem Verteiler (2) und/oder an mindestens einem Sammler (3) mindestens eine Haltevorrichtung angeordnet ist.

16. Energiespeicher nach einem der vorhergehenden Ansprüche,
**dadurch gekennzeichnet,**
**dass** mindestens eine Längsseite (13) an einem Verteiler (2) in einem spitzen Winkel zu mindestens einer Längsachse eines Verteilers (2), rechten Winkel zu mindestens einer Längsachse eines Verteilers (2) und/oder stumpfen Winkel zu mindestens einer Längsachse eines Verteilers (2) angeordnet ist und/oder
**dass** mindestens eine Längsseite (13) an einem Sammler (3) in einem spitzen Winkel zu mindestens einer Längsachse eines Sammlers (3), rechten Winkel zu mindestens einer Längsachse eines Sammlers (3) und/oder stumpfen Winkel zu mindestens einer Längsachse eines Sammlers (3) angeordnet ist.

## Claims

1. An energy storage unit having at least one container (15), in which several heat transfer elements (1) are arranged, wherein the heat transfer elements (1) have at least one flexible element (4) on which at least one distributor (2) and at least one accumulator (3) are arranged, wherein the flexible element (4) has at least one flow channel (7) and at least one curve,
**characterized in that**
four insertion plates (17) are arranged plugged together in a lowermost plane, wherein at least two heat transfer elements (1) are arranged coiled on the lowermost plane of the insertion plates (17),
and four further insertion plates (17) are arranged in a second plane engaged on the coiled heat transfer elements (1), wherein also in this case at least two heat transfer elements (1) are arranged coiled on the second plane of the insertion plates (17),
and four further insertion plates (17) are arranged in a third plane engaged on the second plane of the coiled heat transfer elements (1) and a profile section (19) is arranged on at least one insertion plate (17).

2. The energy storage unit according to Claim 1,
**characterized in that**
several heat transfer elements (1), which are coiled and arranged by means of recesses (18) in at least one insertion plate (17) in the container (15), are arranged above one another in the container (15).

3. The energy storage unit according to Claim 1 or Claim 2,
**characterized in that**
the heat transfer element (1) is a heat transfer element (1) having at least one flexible element (4), on which at least one distributor (2) and at least one accumulator (3) are arranged, wherein the flexible element (4) has at least one longitudinal side (13), at least one width (5), at least one flow channel (7), at least one end face and at least one curve, wherein the flexible element (4) is coiled, whereby the at least one distributor (2) has an offset in the direction of the width (5) of the flexible element (4) of the heat transfer element (1) in relation to the at least one accumulator (3).

4. The energy storage unit according to any one of the preceding claims,
**characterized in that**
the heat transfer element (1) can absorb compressive stresses.

5. The energy storage unit according to any one of the preceding claims,
**characterized in that**
the at least one distributor (2) and/or the at least one accumulator (3) are/is at least partially flexible.

6. The energy storage unit according to any one of the preceding claims,
**characterized in that**
the heat transfer element (1) is at least partially made of plastic.

7. The energy storage unit according to any one of the preceding claims,
**characterized in that**
the flexible element (4) is at least partially made of plastic.

8. The energy storage unit according to any one of the preceding claims,
**characterized in that**
the flexible element (4) is designed in the form of a pad.

9. The energy storage unit according to any one of the preceding claims,
**characterized in that**
the at least one flow channel (7) of the flexible element (4) is a capillary tube.

10. The energy storage unit according to any one of the preceding claims,
**characterized in that**
at least one distributor (2) and at least one accumulator (3) are arranged on the same end face (20) of the flexible element (4).

11. The energy storage unit according to any one of the preceding claims,
**characterized in that**
at least one distributor (2) and at least one accumulator (3) are arranged at least partially in axial alignment with one another, at least partially parallel to one another, and/or at least partially axially in one another.

12. The energy storage unit according to any one of the preceding claims,
**characterized in that**
the flexible element (4) has at least two end faces (20, 21), wherein at least one end face (20) has an offset in the direction of the width (5) of the flexible element (4) of the heat transfer element (1) in relation to at least one other end face (21).

13. The energy storage unit according to any one of the preceding claims,
**characterized in that**
the flexible element (4) is at least partially divided into at least two elements (25), which each have an end face (26), whereby the end faces (26) of the elements (25) formed by the division form an end face (20) of the flexible element (4), on which at least one accumulator (3) and at least one distributor (2) are arranged.

14. The energy storage unit according to any one of the preceding claims,
**characterized in that**
at least one distributor (2) and at least one accumulator (3), at least two distributors (2) and/or at least two accumulators (3) are formed from one component.

15. The energy storage unit according to any one of the preceding claims,
**characterized in that**
at least one holding device is arranged on at least one distributor (2) and/or on at least one accumulator (3).

16. The energy storage unit according to any one of the preceding claims,
**characterized in that**
at least one longitudinal side (13) on a distributor (2) is arranged at an acute angle to at least one longitudinal axis of a distributor (2), at a right angle to at least one longitudinal axis of a distributor (2) and/or at an obtuse angle to at least one longitudinal axis of a distributor (2) and/or
that at least one longitudinal side (13) on an accumulator (3) is arranged at an acute angle to at least one longitudinal axis of an accumulator (3), at a right angle to at least one longitudinal axis of an accumulator (3) and/or at an obtuse angle to at least one longitudinal axis of an accumulator (3).

## Revendications

1. Accumulateur d'énergie, comprenant au moins un réservoir (15), dans lequel sont placés plusieurs éléments de transfert thermique (1), les éléments de transfert thermique (1) comportant au moins un élément flexible (4) sur lequel sont placés au moins un distributeur (2) et au moins un collecteur (3), l'élément flexible (4) comportant au moins un canal d'écoulement (7) et au moins une courbure,
**caractérisé en ce que**
quatre plaques emboîtables (17) sont placées en étant emboîtées dans un plan inférieur extrême, au moins deux éléments de transfert thermique (1) étant placés en étant enroulés dans le plan inférieur extrême des plaques emboîtables (17),
et **en ce que** quatre plaques emboîtables (17) supplémentaires sont placées dans un deuxième plan, en étant emboîtées sur les éléments de transfert thermique (1) enroulés, également ici, au moins deux éléments de transfert thermique (1) étant placés en étant enroulés sur le deuxième plan des plaques emboîtables (17),
et **en ce que** quatre plaques emboîtables (17) supplémentaires sont placées dans un troisième plan, en étant emboîtées sur le deuxième plan des éléments de transfert thermique (1) et sur au moins une plaque emboîtable (17) est placé un profilé (19).

2. Accumulateur d'énergie selon la revendication 1,
**caractérisé en ce que**
plusieurs éléments de transfert thermique (1) enroulés et placés à l'aide d'encoches (18) dans au moins une plaque emboîtable (17) dans le réservoir (15) sont superposés dans le réservoir (15).

3. Accumulateur d'énergie selon la revendication 1 ou la revendication 2,
**caractérisé en ce que**
l'élément de transfert thermique (1) est un élément de transfert thermique (1) pourvu d'au moins un élément flexible (4), sur lequel est placé au moins un distributeur (2) et au moins un collecteur (3), l'élément flexible (4), comportant au moins un côté longitudinal (13), au moins une largeur (5), au moins un canal d'écoulement (7), au moins une face frontale et au moins une courbure, l'élément flexible (4) étant enroulé, suite à quoi l'au moins un distributeur (2) présente un décalage dans la direction de la largeur (5) de l'élément flexible (4) de l'élément de transfert thermique (1) par rapport à l'au moins un collecteur (3).

4. Accumulateur d'énergie selon l'une quelconque des revendications précédentes,
**caractérisé en ce que**
l'élément de transfert thermique (1) est susceptible d'absorber des contraintes par compression.

5. Accumulateur d'énergie selon l'une quelconque des revendications précédentes,
**caractérisé en ce que**
l'au moins un distributeur (2) et/ou l'au moins un collecteur (3) est au moins partiellement flexible.

6. Accumulateur d'énergie selon l'une quelconque des revendications précédentes,
**caractérisé en ce que**
l'élément de transfert thermique (1) est au moins partiellement en matière plastique.

7. Accumulateur d'énergie selon l'une quelconque des revendications précédentes,
**caractérisé en ce que**
l'élément flexible (4) est au moins partiellement en matière plastique.

8. Accumulateur d'énergie selon l'une quelconque des revendications précédentes,
**caractérisé en ce que**
l'élément flexible (4) est conçu sous la forme d'une natte.

9. Accumulateur d'énergie selon l'une quelconque des revendications précédentes,
**caractérisé en ce que**
l'au moins un canal d'écoulement (7) de l'élément flexible (4) est un capillaire.

10. Accumulateur d'énergie selon l'une quelconque des revendications précédentes,
**caractérisé en ce que**
l'au moins un distributeur (2) et l'au moins un collecteur (3) sont placés sur la même face frontale (20) de l'élément flexible (4).

11. Accumulateur d'énergie selon l'une quelconque des revendications précédentes,
**caractérisé en ce que**
l'au moins un distributeur (2) et l'au moins un collecteur (3) sont placés en étant au moins partiellement alignés l'un sur l'autre en direction axiale, en étant au moins partiellement parallèles l'un à l'autre et/ou en étant au moins imbriqués partiellement l'un dans l'autre en direction axiale.

12. Accumulateur d'énergie selon l'une quelconque des revendications précédentes,
**caractérisé en ce que**
l'élément flexible (4) comporte au moins deux faces frontales (20, 21), au moins une face frontale (20) présentant un décalage dans la direction de la largeur (5) de l'élément flexible (4) de l'élément de transfert thermique (1) par rapport à au moins une autre face frontale (21).

13. Accumulateur d'énergie selon l'une quelconque des revendications précédentes,
**caractérisé en ce que**
l'élément flexible (4) est séparé au moins partiellement en au moins deux éléments (25), qui comportent chacun une face frontale (26), les faces frontales (26) des éléments (25) créées par la séparation formant une face frontale (20) de l'élément flexible (4), sur laquelle sont placés l'au moins un collecteur (3) et l'au moins un distributeur (2).

14. Accumulateur d'énergie selon l'une quelconque des revendications précédentes,
**caractérisé en ce**
**qu'**au moins un distributeur (2) et au moins un collecteur (3), au moins deux distributeurs (2) et/ou au moins deux collecteurs (3) sont d'un tenant.

15. Accumulateur d'énergie selon l'une quelconque des revendications précédentes,
**caractérisé en ce que**
sur au moins un distributeur (2) et/ou sur au moins un collecteur (3) est placé au moins un dispositif de maintien.

16. Accumulateur d'énergie selon l'une quelconque des revendications précédentes,
**caractérisé en ce**
**qu'**au moins un côté longitudinal (13) sur un distributeur (2) est placé sous un angle aigu par rapport à au moins un axe longitudinal d'un distributeur (2), sous un angle droit par rapport à au moins un axe longitudinal d'un distributeur (2) et/ou sous un angle obtus par rapport à au moins un axe longitudinal d'un distributeur (2)
et/ou
en ce qu'au moins un côté longitudinal (13) sur un collecteur (3) est placé sous un angle aigu par rapport à au moins un axe longitudinal d'un collecteur (3), sous un angle droit par rapport à au moins un axe longitudinal d'un collecteur (3) et/ou sous un angle obtus par rapport à au moins un axe longitudinal d'un collecteur (3).
